# EUROPEAN PATENT SPECIFICATION

(11) **EP 2 130 435 B1**
(45) Date of publication and mention of the grant of the patent: **07.10.2015**
(21) Application number: 08720659.5
(22) Date of filing: 28.03.2008
(51) Int. Cl.: A01N 37/44, A01N 59/00, A01N 59/16, A01P 21/00

(54) **AGENT FOR IMPROVING ALKALI RESISTANCE OF PLANT AND METHOD FOR IMPROVING ALKALI RESISTANCE OF PLANT**
MITTEL ZUR ERHÖHUNG DER ALKALIRESISTENZ VON PFLANZEN SOWIE VERFAHREN ZUR ERHÖHUNG DER ALKALIRESISTENZ VON PFLANZEN
AGENT PERMETTANT D'AMÉLIORER LA RÉSISTANCE AUX ALCALINS D'UNE PLANTE ET PROCÉDÉ D'AMÉLIORATION DE LA RÉSISTANCE AUX ALCALINS D'UNE PLANTE

(30) Priority: 30.03.2007 JP 2007092856
(43) Date of publication of application: 09.12.2009
(73) Proprietor: Cosmo Oil Co., Ltd., Tokyo 105-8528 (JP)
(72) Inventor: WATANABE, Keitaro, Satte-shi Saitama 340-0112 (JP); KOBORI, Toshihiro, Satte-shi Saitama 340-0112 (JP); TANAKA, Tohru, Tokyo 106-6018 (JP); IWAI, Kazuya, Tokyo 105-8528 (JP)
(74) Representative: Hartz, Nikolai
(86) International application number: PCT/JP2008/000792
(87) International publication number: WO 2008/126374

(56) References cited:
- YOSHIDA R ET AL: "5-aminolevulinic Acid to Biryo Yoso tono Kumiawase no Yomen Sanpu ga Komatsuna no Shuryo ni Oyobosu Koka", THE HOKURIKU CROP SCIENCE,, no. 39, 31 March 2004 (2004-03-31), pages 66-68, XP008117080,
- Charles C. Mitchell ET AL: "Soil Acidity and Liming- Part 2", http://hubcap.clemson.edu/~blpprt/lowerpH. html, 15 April 2001 (2001-04-15), XP055062405, South Carolina, US Retrieved from the Internet: URL:http://hubcap.clemson.edu/~blpprt/lowe rpH.html [retrieved on 2013-05-08]
- YOSHIDA R. ET AL.: '5-aminolevulinic Acid to Biryo Yoso tono Kumiawase no Yomen Sanpu ga Komatsuna no Shuryo ni Oyobosu Koka' THE HOKURIKU CROP SCIENCE no. 39, 31 March 2004, pages 66 - 68, XP008117080
- SATO N. ET AL.: '5-aminovulinic Acid (ALA) Ganyu Kokinosei Hiryo 'Pentakeep V'' KIKAN HIRYO no. 102, October 2005, pages 122 - 127, XP008142277

## Description

### Technical Field

The present invention relates to an agent for improving alkali tolerance of a plant, and to a method for improving alkali tolerance of a plant through treatment with the agent.

### Background Art

Hitherto, in order to support explosively increasing population, humankind has continuously reclaimed land and improved agricultural techniques. As a result, most of the land of good soil which allows farming has already been cultivated. Thus, urgent and keen demand has arisen for development of a technique that overcomes poor soil conditions to realize agricultural production. One of the most common poor soil conditions is alkaline soil. In fact, a vast area of land of alkaline soil in the world remains uncultivated. Greening of alkaline soil areas is important for protecting the global environment as well as for agricultural production.

There have been known methods for the melioration of alkaline soil, such as replacement of soil (soil dressing), washing out salts - because they make the soil alkaline-with a large amount of water (leaching), and treatment with acid or sulfur (neutralization). However, these methods have drawbacks. For example, soil dressing, the cost of which is very high, cannot be applied to a large area, and treatment of discharged soil is problematic. Leaching is not realistic, since alkaline soil is distributed mainly in dry areas. Neutralization with acid or sulfur is effective for weakly alkaline soil, but when this technique is applied to strongly alkaline soil, they remains a problem that plant growth is not promoted in the improved soil, although alkalinity of the soil is mitigated.

Basically, these techniques are physicochemical treatments for soil and are not applied to plants themselves. Under such circumstances, demand has arisen for the development of an agent for improving alkali tolerance which directly acts on a plant to improve alkali tolerance thereof, and for a method for improving alkali tolerance of a plant employing such an agent for improving,alkali tolerance.

Meanwhile, 5-aminolevulinic acid, a derivative thereof, and a salt of either of these are known to promote plant growth and to improve cold resistance (Patent Document 1), and also to improve plant growth under low-luminance conditions (Patent Document 2). Also known is a technique of improving salt tolerance of plant by use of these compounds for solving the problem of poor soil (Patent Document 3). Furthermore, spraying of 5-aminolevulinic acid is known to prevent decrease in foliage yield of plants grown in alkaline soil (Non-Patent Document 1).
Yoshida et al. The Hokuriku Crop Science, no. 39, 31 March 2004, pages 66-68 describes the effect of foliar application of a combination of 5-aminolevulinic acid and micro elements on the yield of Komatsuna.
Mitchell et al. "Soil acidity and liming - Part 2", http://hubcap.clemson.edu/-blpprt/lowerpH.html relates to the lowering of soil pH.
[Patent Document 1] JP-A-1992-338305
[Patent Document 2] JP-A-1995-184479
[Patent Document 3] JP-A-1996-151304
[Non-Patent Document 1] Conference Record, The Japanese Society for Chemical Regulation of Plants, 37: 87-88, 2002

### Disclosure of the Invention

### Problems to be Solved by the Invention

However, the effect of 5-aminolevulinic acid alone on improving alkali tolerance is insufficient, and the way in which 5-aminolevulinic acid is involved in plant growth under strongly alkaline soil conditions has never been known.

Thus, an object of the present invention is to provide an agent and a method for improving alkali tolerance of plant. Means for Solving the Problems

The aforementioned Non-Document 1 discloses spraying of 5-aminolevulinic acid in combination with an iron chelate. According to the disclosure, the foliage yield of plant in the combined spray area is lower than that in a water-treated area without spraying thereof, indicating that spraying the two species in combination exhibits no effect on improvement of alkali tolerance.

The present inventors have carried out extensive studies on alkali damage to plants, and have found that a combination of 5-aminolevulinic acid, a derivative thereof, or a salt of either of these with a specific amount of an iron compound remarkably improves alkali tolerance of a plant grown in strongly alkaline soil. The present inventors have also found that the alkali tolerance is further improved through further adding elemental sulfur to the combination. The present invention has been accomplished on the basis of these findings.

Accordingly, the present invention provides an agent for improving alkali tolerance of a plant, comprising:
(i) 5-aminolevulinic acid or a derivative thereof represented by the following formula (1):

   R²R¹NCH₂COCH₂CH₂COR³ (1)

   wherein each of R¹ and R² represents a hydrogen atom, an alkyl group, an acyl group, an alkoxycarbonyl group, an aryl group, or an aralkyl group, and R³ represents a hydroxy group, an alkoxy group, an acyloxy group, an alkoxycarbonyloxy group, an aryloxy group, an aralkyloxy group, or an amino group,
   or a salt of either of these;
(ii) an iron compound; and
(iii) elemental sulfur.

The present invention also provides a method for improving alkali tolerance of a plant, characterized by treating a plant, or soil or a medium in which the plant grows with the agent for improving alkali tolerance of a plant.

### Effects of the Invention

According to the present invention, alkali tolerance of a plant can be improved, whereby agricultural production in strongly alkaline soil and greening of alkaline soil can be realized.

### Best Modes for Carrying Out the Invention

As used herein, the term "alkaline conditions" refers to conditions where a plant is damaged with alkali. The soil under the conditions is referred to as "alkaline soil." Strictly speaking, the definition of alkaline soil is varied in accordance with the type of plant, and the alkaline soil is not defined strictly by the pH of the soil. However, generally, soil having a pH of 7 or higher, under which many plants are damaged, is called "alkaline soil," and that having a pH of 8 or higher, particularly 8.5 or higher, is called "strongly alkaline soil."

The agent for improving alkali tolerance of the present invention exhibits a remarkable effect at a pH of 7 or higher, preferably 7.5 or higher, more preferably 8 or higher, still more preferably 8.5 or higher, particularly preferably 8.8 or higher. The upper limit of the pH is preferably 13. However, as mentioned above, the rigorous definition of alkaline soil varies in accordance with the type of plant and therefore, alkaline conditions cannot be determined for all the plants. For the sake of understanding the concept of "alkaline conditions," some examples will be given below.

Spinach: Spinach is an alkalophilic plant, and the optimum pH of the soil for growth thereof is about 7.5. Although the soil having such a pH is "alkaline soil" for many plants, spinach grows most vitally at that pH. However, when the pH of the soil is in excess of 8, the growth of spinach is considerably impaired, resulting in diminishing green color of foliage. That is, the alkaline soil for spinach has a pH of 8 or higher, which is higher than the alkaline pH for many plants.

Blueberry: Blueberry is an acidophilic plant, and the optimum pH of the soil for growth thereof is about 5.5. Blueberry is alkali-damaged even in soil having a pH of 6.5, which is preferred for many plants, and suppression of growth and yellowing of foliage are observed. That is, the alkaline soil for blueberry has a pH of 6.5 or higher, which is lower than the pH for many plants.

The 5-aminolevulinic acid or a derivative thereof are compounds represented by formula (1):
[F1]

R²R¹NCH₂COCH₂CH₂COR³ (1)

(wherein each of R¹ and R² represents a hydrogen atom, an alkyl group, an acyl group, an alkoxycarbonyl group, an aryl group, or an aralkyl group, and R³ represents a hydroxy group, an alkoxy group, an acyloxy group, an alkoxycarbonyloxy group, an aryloxy group, an aralkyloxy group, or an amino group), or a salt thereof.

In formula (1), the alkyl group (R¹ and R²) is preferably a C1 to C24 linear or branched alkyl group, more preferably a C1 to C18 alkyl group, particularly preferably a C1 to C6 alkyl group. Examples of the C1 to C6 alkyl group include methyl, ethyl, n-propyl, isopropyl, n-butyl, and secbutyl. The acyl group is preferably a C1 to C12 linear or branched alkanoyl group, alkenylcarbonyl group, or aroyl group, particularly preferably a C1 to C6 alkanoyl group. Examples of the acyl group include formyl, acetyl, propionyl, and butyryl. The alkoxycarbonyl group is preferably a C2 to C13 (in total) alkoxycarbonyl group, particularly preferably C2 to C7 alkoxycarbonyl group. Examples of the alkoxycarbonyl group include methoxycarbonyl, ethoxycarbonyl, n-propoxycarbonyl, and isopropoxycarbonyl. The aryl group is preferably a C6 to C16 aryl group, for example, phenyl or naphthyl. The aralkyl group is preferably a group formed from a C6 to C16 aryl group and the aforementioned C1 to C6 alkyl group, for example, benzyl.

The alkoxy group (R³ in formula (1)) is preferably a C1 to C24 linear or branched alkoxy group, more preferably a C1 to C16 alkoxy group, particularly preferably a C1 to C12 alkoxy group. Examples of the alkoxy group include methoxy, ethoxy, n-propoxy, isopropoxy, n-butoxy, pentyloxy, hexyloxy, octyloxy, decyloxy, and dodecyloxy. The acyloxy group is preferably a C1 to C12 linear or branched alkanoyloxy group, particularly preferably a C1 to C6 alkanoyloxy group. Examples of the acyloxy group include acetoxy, propionyloxy, and butyryloxy. The alkoxycarbonyloxy group is preferably a C2 to C13 (in total) alkoxycarbonyloxy group, particularly preferably a C2 to C7 (in total) alkoxycarbonyloxy group. Examples of the alkoxycarbonyloxy group include methoxycarbonyloxy, ethoxycarbonyloxy, n-propoxycarbonyloxy, and isopropoxycarbonyloxy. The aryloxy group is preferably a C6 to C16 aryloxy group, for example, phenoxy or naphthyloxy. The aralkyloxy group is preferably a group including the aforementioned aralkyl group, for example, benzyloxy.

In formula (1), each of R¹ and R² is preferably a hydrogen atom. R³ is preferably a hydroxy group, an alkoxy group, or an aralkyloxy group, more preferably a hydroxy group or a C1 to C12 alkoxy group, particularly preferably methoxy or hexyloxy.

Examples of the 5-aminolevulinic acid derivative include 5-aminolevulinic acid methyl ester, 5-aminolevulinic acid ethyl ester, 5-aminolevulinic acid propyl ester, 5-aminolevulinic acid butyl ester, 5-aminolevulinic acid pentyl ester, and 5-aminolevulinic acid hexyl ester. Of these, 5-aminolevulinic acid methyl ester and 5-aminolevulinic acid hexyl ester are particularly preferred.

No particular limitation is imposed on the salt of 5-aminolevulinic acid or the salt of a derivative thereof, and acid-added salts of inorganic acid or organic acid are preferred. Examples of the inorganic acid-added salt include hydrochlorides, hydrobromides, sulfates, nitrates, and phosphates. Examples of the organic acid-added salt include acetates, lactates, citrates, tartrates, succinates, maleates, fumarates, and ascorbates. The salt of 5-aminolevulinic acid or the salt of a derivative thereof is particularly preferably 5-aminolevulinic acid hydrochloride or 5-aminolevulinic acid phosphate.

These salts may be produced through any of the chemical synthesis methods and methods employing a microorganism or an enzyme. The salts may be produced through methods disclosed in JP-A-1973-92328, JP-A-1987-111954, JP-A-1990-76841, JP-A-1994-172281, JP-A-1995-188133, JP-A-1999-42083, etc. The thus-produced 5-aminolevulinic acid, a salt thereof, a derivative of either of these, and a reaction mixture and fermentation liquid thereof before purification may be employed without separation and purification, so long as they is not harmful for plant. Also, commercial products of the salts may be employed.

These 5-aminolevulinic acid, a derivative thereof, and a salt of either of these may be used singly or in combination of two or more species.

No particular limitation is imposed on the iron compound employed in the present invention, so long as the compound contains iron and is not harmful for plants. Specific example include metallic iron, iron salts, and iron chelates. Examples of the salts include organic acid salts and inorganic acid salts. Examples of the organic acid include carboxylic acids such as hydroxycarboxylic acids. Examples of the carboxylic acid include those having carbon atoms in total of 2 to 8. Examples of the iron chelate include the compounds represented by formula (2): 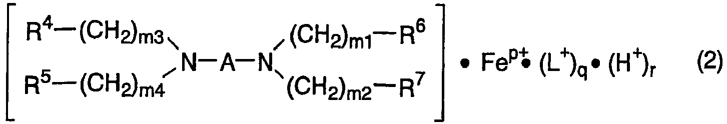 (wherein each of m1, m2, m3, and m4 is a number of 1 to 4; each of R⁴, R⁵, R⁶, and R⁷ represents -COO⁻ or -SO₃⁻; A represents -(CH₂)ₘ₅- or -(CH₂)ₘ₆-N[-(CH₂)ₘ₇-R⁸]-(CH₂)ₘ₈- (wherein each of m5, m6, m7, and m8 is a number of 1 to 4, and R⁸ represents -COO⁻ or -SO₃⁻); p is a number of 2 or 3; q is a number of 1 to 3; r is a number of 0 to 2; and L represents NH₄ or an alkali metal, wherein when A represents -(CH₂)ₘ₅-, p+q+r is 4, and when A represents (CH₂)ₘ₆-N[-(CH₂)ₘ₇-R⁸]-(CH₂)ₘ₈-, p+q+r is 5).

In the compounds represented by formula (2), each of R⁴, R⁵, R⁶, and R⁷ is preferably -COO⁻. In formula (2), each of m1, m2, m3, and m4 is preferably 1. In the compounds represented by formula (2), preferably, A represents - (CH₂)ₘ₅-, and p is 3, q is 1, and r is 0. More preferably m5 is 2 or 3. Also, in the compounds represented by formula (2), preferably, A represents -(CH₂)ₘ₆-N[-(CH₂)ₘ₇-R⁸]-(CH₂)ₘ₈-, and p is 3, q is 1, and r is 1. More preferably, each of m6, m7, and m8 is 1 or 2, R⁸ is -COO⁻, and L is NH₄.

Examples of the iron compound employed in the present invention include metallic iron, iron oxide, heme iron, iron citrate, iron succinate, iron sodium citrate, iron ammonium citrate, iron acetate, iron oxalate, iron malate, iron sodium succinate citrate, ferrous pyrophosphate, ferric pyrophosphate, dextran iron, iron lactate, iron gluconate, sodium ethylenediaminetetraacetatoferrate, potassium ethylenediaminetetraacetatoferrate, ammonium ethylenediaminetetraacetatoferrate, sodium diethylenetriaminepentaacetatoferrate, potassium diethylenetriaminepentaacetatoferrate, ammonium diethylenetriaminepentaacetatoferrate, iron fulvate, iron humate, iron ligninsulfate, iron chloride, iron nitrate, iron sulfate, ammonium iron sulfate, iron glycerophosphate, iron tartrate, and iron glycolate. These compounds may be used singly or in combination of two or more species.

In the agent for improving alkali tolerance of the present invention, the ratio of the concentration of 5-aminolevulinic acid, a derivative thereof, or a salt of either of these to the concentration of iron compound, which varies depending on the use of the agent, is 1 to 10,000 mass% (iron compound, as reduced to iron) with respect to 100 mass% of 5-aminolevulinic acid, a derivative thereof, or a salt of either of these. Particularly from the viewpoint of improvement of alkali tolerance to strongly alkaline soil, the ratio is preferably 20 to 1,000 mass%, more preferably 50 to 1,000 mass%, still more preferably 50 to 300 mass%, particularly preferably 80 to 200 mass%, with respect to 100 mass% of 5-aminolevulinic acid, a derivative thereof, or a salt of either of these.

In order to further improve alkali tolerance of plant, elemental sulfur is incorporated into the agent for improving alkali tolerance of the present invention. The term "elemental sulfur" refers to a substance consisting of exclusively of sulfur atoms (e.g., S8, S6, S4, and S2, and the like), and the form thereof is not particularly limited. Specifically, elemental sulfur which is also commercially available as a pharmaceutical product as defined by Pharmacopoeia of Japan may be used. In the present invention, a mixture of S8, S6, and the like may be used, so long as it is generally available, and the purity of such products is not particularly limited. The form thereof may be brains or powder, so long as it is solid. No particular limitation is imposed on the particle size, and the particle size is preferably 0.001 to 10 mm, more preferably 0.01 to 5 mm, particularly preferably 0.01 to 3 mm.

The ratio (by mass) of the concentration of 5-aminolevulinic acid, a derivative thereof, or a salt of either of these to the concentration of elemental sulfur, which varies depending on the use of the agent, is 100 to 10,000,000, preferably 1,000 to 1,000,000, more preferably 5,000 to 1,000,000, with respect to 1 part by mass of 5-aminolevulinic acid, a derivative thereof, or a salt of either of these.

The agent for improving alkali tolerance of the present invention, containing 5-aminolevulinic acid, a derivative thereof, or a salt of either of these, an iron compound, and elemental sulfur, may further contain additional ingredients such as an agent for regulating plant growth, saccharide, amino acid, nucleic acid, organic acid, alcohol, vitamin, sulfur species other than elemental sulfur, mineral, and the like. Examples of the agent for regulating plant growth include brassinolide such as epibrassinolide, cholines such as choline chloride and choline nitrate, indolebutyric acid, indoleacetic acid, ethychlozate, 1-naphthylacetamide, isoprothiolane, nicotinamide, hydroxyisoxazole, calcium peroxide, benzylaminopurine, methasulfocarb, oxyethylene docosanol, ethephon, cloxyfonac, gibberellin, streptomycin, daminozide, benzylaminopurine, 4-CPA, ancymidol, inabenfide, uniconazole, chlormequat, dikegulac, mefluidide, calcium carbonate, and piperonyl butoxide.

Examples of the saccharide include glucose, xylitol, sorbitol, galactose, xylose, mannose, arabinose, madulose, sucrose, ribose, rhamnose, fructose, maltose, lactose, and maltotriose.

Examples of the amino acid include asparagine, glutamine, histidine, tyrosine, glycine, arginine, alanine, tryptophan, methionine, valine, proline, leucine, lysine, isoleucine, and ectoine.

Examples of the nucleic acid include RNA and DNA.

Examples of the organic acid include formic acid, acetic acid, propionic acid, butyric acid, valeric acid, oxalic acid, phthalic acid, benzoic acid, lactic acid, citric acid, tartaric acid, malonic acid, malic acid, succinic acid, glycolic acid, glutamic acid, aspartic acid, maleic acid, caproic acid, caprylic acid, myristic acid, stearic acid, palmitic acid, pyruvic acid, α-ketoglutaric acid, and levulinic acid.

Examples of the alcohol include methanol, ethanol, propanol, butanol, pentanol, hexanol, and glycerol.

Examples of the vitamin include nicotinamide, vitamin B6, vitamin B12, vitamin B5, vitamin C, vitamin B13, vitamin B1, vitamin B3, vitamin B2, vitamin K3, vitamin A, vitamin D2, vitamin D3, vitamin K1, α-tocopherol, β-tocopherol, γ-tocopherol, δ-tocopherol, p-hydroxybenzoic acid, biotin, folic acid, nicotinic acid, pantothenic acid, and α-liponic acid.

Examples of the sulfur species other than elemental sulfur (an ingredient of the present invention) include sulfuric acid, sulfurous acid, thiosulfuric acid, hydrogensulfate, hydrogensulfite, and sulfonic acid.

Examples of the mineral include nitrogen, phosphoric acid, potassium, boron, manganese, magnesium, zinc, copper, and molybdenum.

The agent for improving alkali tolerance of the present invention may be in any forms such as powder, granules, liquid, and a flowable agent. These forms may be prepared by a conventional method by use of an additive such as a solvent, a dispersant, or an extender. In the agent for improving alkali tolerance of the present invention containing elemental sulfur, solid forms such as powder and granules are preferred.

No particular limitation is imposed on the plant to which the agent for improving alkali tolerance of the present invention is applied. Examples of the plant include grains, vegetables, fruits, flowing plants, arbores, luguminia, lawn grass, potatoes, allium, and pasturage.

Specific examples include *Curciferae* such as Komatsuna; *Malvaceae* such as cotton; true grasses such as corn; *Compositae* such as sunflower; and *Solanaceae* such as tomato. More specific examples include soybean, kidney bean, broad bean, Chinese cabbage, perilla, *Festuca pratensis Huds, Phalaris arundinacea L.,* Alsike clover, white clover, ladino clover, Pangola grass, colored guinea grass, guinea grass, Dallis grass, green leaf desmodium, *Pueraria hirsuta,* onion, aspapagus, peas, cabbage, brown mustard, carrot, garland chrysanthemum, red clover, crimson clover, chinese milk vetch, rose grass, green panic, barley, soughum, Mizuna, sponge gourd, beats, spinach, eggplant, capsicum, lettuce, burdock, alfalfa, Buffel grass, foxtail millet, pumpkin, turnip, sweet pepper, tangerine, apple, persimmon, plum, pear, grape, peach, azalea (satsuki), oak (kunigi), Japanese cedar, hinoki cypress, Japanese oak, Japanese beech, adzuki, peanut, peas, Korean lawn grass, nebt grass, wild grass, potato, sweet potato, aroid, Chinese yam, taro, welsh onion, scallion, chrysanthemum, rose, lily, cyclamen, poinsettia, fuchsia, iris, snapdragon, paphiopedilum, symbidium, carnation, stock, petunia, tulip, zinnia, marigold, primrose, marguerite, aster, pot marigold, cineraria, geranium, gerbera, sweet pea, German iris, pansy, orchid, and peony.

Acidophilic plants receive alkali-stress even in ordinary soil. Therefore, such stress is often observed not only in alkaline soil but also in ordinary soil. Examples of such plants include rice, oat, rye, buckwheat, tea, cranberry, orchard grass, *Festuca araundinacea,* Italian rye grass, talloat grass, bird's foot trefoil, hagi, Bermuda grass, molasses grass, miles lotononis, styro, wheat, corn, sawa millet, hog millet, radish, rutabaga, weeping love grass, Bahia grass, Nepier grass, *Centrosema pubescens,* blueberry, apple, rhododendron, azalea, gardenia, begonia, maidenhair, nephrolepis, ananas, lily of the valley, ageratum, calla lily, and clematis.

The agent for improving alkali tolerance of the present invention may be applied to a plant in foliage treatment (as a foliage treatment agent), soil treatment (as a soil treatment agent), or aerosol treatment (as an aerosol treatment agent). Particularly when the agent for improving alkali tolerance of the present invention containing elemental sulfur is applied to a plant, the agent is preferably applied in soil treatment (soil treatment agent). Alternatively, the agent of the present invention may be absorbed by a plant before planting, cutting, etc. of the plant. The agent may be added to water for hydroponic culture.

Regardless of the presence of elemental sulfur, the agent for improving alkali tolerance of the present invention may be applied a plurality of times to a plant, or to soil or a medium in which the plant grows. The ingredients, 5-aminolevulinic acid, a derivative thereof, a salt of either of these, an iron compound, and elemental sulfur may be applied separately. In this case, the same application method or different methods may be employed. No particular limitation is imposed on the sequence and intervals of application of the agent for improving alkali tolerance and elemental sulfur, and each ingredient may be applied a plurality of times.

Hereinafter, the modes of use of the agent for improving alkali tolerance will be described. Although the amount of ingredients is on the basis of 5-aminolevulinic acid or a similar compound, an iron compound and, furthermore, elemental sulfur are preferably used at the aforementioned proportions.

When the agent for improving alkali tolerance of the present invention is used as a foliage treatment agent, 5-aminolevulinic acid, a derivative thereof, or a salt of either of these is added to a solvent at a concentration of 0.1 to 1,000 ppm, preferably 0.5 to 500 ppm, more preferably 0.5 to 300 ppm, and the thus-obtained liquid agent is used 10 to 1,000 L per 10 ares, more preferably 50 to 300 L. In the case where the agent is applied to a plant having foliage to which the agent is difficult to adhere (e.g., monocot), a wetting agent is preferably used in combination. No particular limitation is imposed on the type and amount of the wetting agent.

When the agent for improving alkali tolerance of the present invention is used as a soil treatment agent, the agent (as 5-aminolevulinic acid, a derivative thereof, or a salt of either of these) is preferably used 1 to 1,000 g per 10 ares, more preferably 10 to 500 g. In the case of hydroponic culture, the amount is preferably a half thereof.

When the agent for improving alkali tolerance of the present invention is used as an aerosol treatment agent, the agent (as 5-aminolevulinic acid, a derivative thereof, or a salt of either of these) is added to a solvent at a concentration of 0.1 to 1,000 ppm, preferably 0.5 to 500 ppm, and the thus-obtained liquid agent is used 10 to 1,000 L per 10 ares, more preferably 50 to 300 L.

In the case in which a plant is immersed in a liquid of the agent for improving alkali tolerance of the present invention (5-aminolevulinic acid, a derivative thereof, or a salt of either of these) to absorb the agent before planting, the liquid of the agent (5-aminolevulinic acid, a derivative thereof, or a salt of either of these) preferably has a concentration of 0.001 to 10 ppm, more preferably 0.01 to 5 ppm. The immersion time is preferably one hour to one week, more preferably three hours to one day.

Any of the above treatment methods is effective when it is performed in any phase of plant growth. Particularly, a remarkable effect can be attained when any treatment method is performed in a seedling state or a fruit maturity stage. Each treatment method provides a sufficient effect by a single treatment. However, through performing any of the treatment methods a plurality of times, the effect is more enhanced. When treatment is performed a plurality of times, the aforementioned treatment methods may be combined. When the agent for improving alkali tolerance of the present invention is employed in a mixture with a pesticide, fertilizer, etc. for the purpose of convenience, any kind of material may be mixed with the agent, so long as the effect of the present invention is not impaired.

### Examples

The present invention will next be described in detail by way of examples, which should not be construed as limiting the invention thereto.

### Example 1 to 6 and Comparative Examples 1 to 3

Each of the pots (1/5000 a) was filled with andosols soil, and *Komatsuna* (species: Calvita, product of Nohara Seed Co., Ltd.) was sown in the soil. At the 3 leaf stage, five uniform seedlings per pot were selected by cutting. An aqueous solution (0.05 wt.%) of each agent having a composition shown in Table 1 was applied to the stems and leaves of the plants in each pot (5 mL/pot). Sulfur powder ("sulfur, powder," product of Wako Pure Chemical Industries, Ltd.) was separately used in an amount given in Table 1 for soil treatment. The same sulfur powder was employed in the following Examples. Three days after the treatment, subirrigation was performed with a 0.5-mol/L aqueous sodium carbonate/sodium hydrogencarbonate buffer (pH: 9.0). One week after irrigation, the fresh weight of shoots of the plants was measured so as to check the growth conditions.

Table 1 shows the results. In Comparative Example 1, water was employed instead of an aqueous solution of each agent.

Examples 1 to 5, 7, 8, 10, 11, 13, 15, 16, 17, 19, 21 and 23 are reference examples.

**[Table 1]**

| | Agent | | Fresh weight of shoots (%) (5 plants in total, relative to treatment period) |
|---|---|---|---|
| | Ingredients | Concentration (mass%) | |
| Ex. 1 | 5-Aminolevulinic acid hydrochloride | 0.3 | 85 |
| | Fe-EDTA^{*1} | 0.6^{*2} | |
| Ex. 2 | 5-Aminolevulinic acid hydrochloride | 0.3 | 91 |
| | Fe-DTPA^{*3} | 0.6^{*2} | |
| Ex. 3 | 5-Aminolevulinic acid hydrochloride | 0.3 | 64 |
| | Iron lactate | 0.6^{*2} | |
| Ex. 4 | 5-Aminolevulinic acid hydrochloride | 0.3 | 72 |
| | Iron chloride | 0.6^{*2} | |
| Ex. 5 | 5-Aminolevulinic acid hydrochloride | 0.3 | 76 |
| | Iron succinate | 0.6^{*2} | |
| Ex. 6 | 5-Aminolevulinic acid hydrochloride | 0.3 | 95 |
| | Fe-DTPA acid*3 | 0.6^{*2} | |
| | Sulfur powder | 0.75 g | |
| Comp. Ex. 1 | (Water) | - | 35 |
| Comp. Ex. 2 | 5-Aminolevulinic acidhydrochloride | 0.3 | 55 |
| Comp. Ex. 3 | Sulfur powder | 0.75 g | 37 |

| | | | |
|---|---|---|---|
| *1: Ammonium ethylenediaminetetraacetatoferrate *2: In iron equivalent *3: Ammonium diethylenetriaminepentaacetatoferrate | | | |

As is clear from Table 1, combined use of 5-aminolevulinic acid hydrochloride and an iron compound was found to improve alkali tolerance of the plant and to prevent alkali damage. Particularly when an Fe-chelate such as Fe-EDTA or Fe-DTPA was used in combination, these effects were remarkably attained. Furthermore, when sulfur was additionally employed, the alkali tolerance of the plant was further improved, and alkali damage was more effectively prevented.

### Example 7

Calcium carbonate was added to field soil so as to adjust the Ca content to 5 mass%, and an appropriate amount of aqueous sodium carbonate solution was added thereto, followed by sufficiently mixing, to thereby provide alkaline soil (pH: 8.8). A chemical fertilizer (base fertilizer) was added to the alkaline soil in an amount of 10 kg/10 a (as reduced to N). Each of the pots (1/5000 a) was filled with the above soil, and 10 seeds of *Komatsuna* (Calvita, product of Nohara Seed Co., Ltd.) were sown in the soil, followed by cultivation in a greenhouse. Ten days after, five uniform seedlings per pot were selected by cutting. After cutting, an aqueous solution (0.05 mass%) of each agent having a composition shown in Table 2 was sprayed every 2 weeks to the stems and leaves of the plants in each pot (5 mL/pot), and the pot was controlled under ordinary conditions. Twenty-seven days after sowing, the soil was washed out with water, whereby the plants were harvested. The plant height of each plant was measured. Subsequently, the plants were dried at 80°C for 24 hours by a drier, and the dry weight of shoots of each plant was measured.

The averaged values and test conditions are shown in Table 2.

### Example 8

The test procedure of Example 7 was repeated, except that the amounts of ingredients were changed. The results are shown in Table 2.

### Example 9

The test procedure of Example 7 was repeated, except that application of sulfur to soil treatment and application of other agent ingredients to foliage treatment were simultaneously performed. The results are shown in Table 2.

### Comparative Example 4

The test procedure of Example 7 was repeated, except that no agent treatment was performed. The results are shown in Table 2.

### Comparative Example 5

The test procedure of Example 7 was repeated, except that the agent was changed. The results are shown in Table 2.

### Comparative Example 6

The test procedure of Example 7 was repeated, except that the agent was changed. The results are shown in Table 2.

### Comparative Example 7

The test procedure of Example 7 was repeated, except that the agent was changed. The results are shown in Table 2.

**[Table 2]**

| | pH of soil | Agent | | Plant height(cm) | Dry weight of shoots (g) |
|---|---|---|---|---|---|
| | | Ingredients | Concentration (mass%) | | |
| Ex. 7 | 8.8 | 5-Aminolevulinic acid hydrochloride | 0.3 | 13.5 | 2.7 |
| | | Fe-DTPA^{*3} | 0.6^{*2} | | |
| Ex. 8 | 8.8 | 5-Aminolevulinic acid hydrochloride | 0.3 | 11.4 | 2.4 |
| | | Fe-DTPA^{*3} | 0.06^{*2} | | |
| Ex. 9 | 8.8 | 5-Aminolevulinic acid hydrochloride | 0.3 | 14.6 | 3.5 |
| | | Fe-DTPA^{*3} | 0.6^{*2} | | |
| | | Sulfur powder | 0.25 g | | |
| Comp. Ex. 4 | 8.8 | (No treatment) | - | 10.2 | 2.1 |
| Comp. Ex. 5 | 8.8 | 5-Aminolevulinic acid hydrochloride | 0.3 | 11.3 | 2.2 |
| Comp. Ex. 6 | 8.8 | Fe-DTPA^{*3} | 0.6^{*2} | 9.8 | 2.0 |
| Comp. Ex. 7 | 8.8 | Sulfur powder | 0.25 g | 10.5 | 2.1 |

| | | | | | |
|---|---|---|---|---|---|
| *2: In iron equivalent *3: Ammonium diethylenetriaminepentaacetatoferrate | | | | | |

As is clear from Table 2, use of 5-aminolevulinic acid hydrochloride and an iron compound was found to improve alkali tolerance of the plant. As compared with Comparative Example 5 (treated with 5-aminolevulinic acid hydrochloride alone), the effect of the present invention was found to be completely different from the known plant-growth promotion effect of 5-aminolevulinic acid hydrochloride. As compared with Examples 7 and 8, a more remarkable effect of improving alkali tolerance was attained in strongly alkaline soil by adding a specific amount of an iron compound to 5-aminolevulinic acid hydrochloride. Furthermore, through combination with sulfur, a remarkable effect of improving alkali tolerance of a plant, which was synergistic with the effect of 5-aminolevulinic acid hydrochloride, was observed.

### Example 10

The test procedure of Example 7 was repeated, except that soil (pH of 7.6) was prepared. The results are shown in Table 3.

### Example 11

The test procedure of Example 10 was repeated, except that the amounts of ingredients were changed. The results are shown in Table 3.

### Example 12

The test procedure of Example 10 was repeated, except that application of sulfur to soil treatment and application of other agent ingredients to foliage treatment were simultaneously performed. The results are shown in Table 3.

### Comparative Example 8

The test procedure of Example 10 was repeated, except that no agent treatment was performed. The results are shown in Table 3.

**[Table 3]**

| | pH of soil | Agent | | Plant height(cm) | Dry weight of shoots(g) |
|---|---|---|---|---|---|
| | | Ingredients | Concentration (mass%) | | |
| Ex. 10 | 7.6 | 5-Aminolevulinic acid hydrochloride | 0.3 | 20.5 | 3.6 |
| | | Fe-DTPA^{*3} | 0.6^{*2} | | |
| Ex. 11 | 7.6 | 5-Aminolevulinic acid hydrochloride | 0.3 | 20.0 | 3.5 |
| | | Fe-DTPA^{*3} | 0.06^{*2} | | |
| Ex. 12 | 7.6 | 5-Aminolevulinic acid hydrochloride | 0.3 | 22.0 | 4.1 |
| | | Fe-DTPA^{*3} | 0.6^{*2} | | |
| | | Sulfur powder | 0.25 g | | |
| Comp. Ex. 8 | 7.6 | (No treatment) | - | 17.1 | 3.2 |

| | | | | | |
|---|---|---|---|---|---|
| *2: In iron equivalent *3: Ammonium diethylenetriaminepentaacetatoferrate | | | | | |

As is clear from Table 3, when the soil having a pH of 7.6 was employed, combinations of 5-aminolevulinic acid hydrochloride with an iron compound, and further with sulfur were found to exhibit the effect of improving alkali tolerance of a plant.

### Example 13

Calcium carbonate was added to field soil so as to adjust the Ca content to 5 mass%, and an appropriate amount of aqueous sodium carbonate solution was added thereto, followed by sufficiently mixing, to thereby provide alkaline soil (pH: 8.8). A chemical fertilizer (base fertilizer) was added to the alkaline soil in an amount of 10 kg/10 a (as reduced to N). Each of the pots (1/5000 a) was filled with the above soil, and 6 seeds of cotton (species: Dwarf cotton, product of Sakata Seed Co.) were sown in the soil on September 22, followed by cultivation in a greenhouse. Ten days after, three uniform seedlings per pot were selected by cutting. After cutting, an aqueous solution (0.05 mass%) of each agent having a composition shown in Table 4 was sprayed every 2 weeks to the stems and leaves of the plants in each pot (5 mL/pot), and the pot was controlled under ordinary conditions. On the day of November 7, the soil was washed out with water, whereby the plants were harvested, and the plant height of each plant was measured. Subsequently, the plants were dried at 80°C for 24 hours by a drier, and the dry weight of shoots of each plant was measured.

The averaged values and test conditions are shown in Table 4.

### Example 14

The test procedure of Example 13 was repeated, except that sulfur was further applied to soil treatment one day after foliage treatment with other agent ingredients. The results are shown in Table 4.

### Comparative Example 9

The test procedure of Example 13 was repeated, except that no agent treatment was performed. The results are shown in Table 4.

### Comparative Example 10

The test procedure of Example 13 was repeated, except that the agent was changed. The results are shown in Table 4.

### Comparative Example 11

The test procedure of Example 13 was repeated, except that the agent was changed. The results are shown in Table 4.

**[Table 4]**

| | pH of soil | Agent | | Plant height(cm) | Dry weight of shoots(g) |
|---|---|---|---|---|---|
| | | Ingredients | Concentration (mass%) | | |
| Ex. 13 | 8.8 | 5-Aminolevulinic acid hydrochloride | 0.3 | 16.3 | 1.4 |
| | | Fe-DTPA^{*3} | 0.6^{*2} | | |
| Ex. 14 | 8.8 | 5-Aminolevulinic acid hydrochloride | 0.3 | 18.1 | 1.7 |
| | | Fe-DTPA^{*3} | 0.6^{*2} | | |
| | | Sulfur powder | 0.25 g | | |
| Comp. Ex. 9 | 8.8 | (No treatment) | - | 12.8 | 0.7 |
| Comp. Ex. 10 | 8.8 | 5-Aminolevulinic acid hydrochloride | 0.3 | 13.1 | 0.9 |
| Comp. Ex. 11 | 8.8 | Sulfur powder | 0.25 g | 13.2 | 0.8 |

| | | | | | |
|---|---|---|---|---|---|
| *2: In iron equivalent *3: Ammonium diethylenetriaminepentaacetatoferrate | | | | | |

As is clear from Table 4, combinations of 5-aminolevulinic acid hydrochloride with an iron compound, and further with sulfur were found to exhibit a remarkable effect of improving alkali tolerance of a plant.

### Example 15

The test procedure of Example 13 was repeated, except that soil having a pH of 8.5 was prepared, and that the amounts of ingredients were changed. The results are shown in Table 5.

### Example 16

The test procedure of Example 15 was repeated, except that the amounts of ingredients were changed. The results are shown in Table 5.

### Comparative Example 12

The test procedure of Example 15 was repeated, except that no agent treatment was performed. The results are shown in Table 5.

**[Table 5]**

| | pH of soil | Agent | | Plant height(cm) | Dry weight of shoots(g) |
|---|---|---|---|---|---|
| | | Ingredients | Concentration (mass%) | | |
| Ex. 15 | 8.5 | 5-Aminolevulinic acid hydrochloride | 0.3 | 15.2 | 1.2 |
| | | Fe-DTPA^{*3} | 0.3^{*2} | | |
| Ex. 16 | 8.5 | 5-Aminolevulinic acid hydrochloride | 0.3 | 14.8 | 1.2 |
| | | Fe-DTPA^{*3} | 0.15^{*2} | | |
| Comp. Ex. 12 | 8.5 | (No treatment) | - | 13.1 | 0.7 |

| | | | | | |
|---|---|---|---|---|---|
| *2: In iron equivalent *3: Ammonium diethylenetriaminepentaacetatoferrate | | | | | |

As is clear from Table 5, when the soil having a pH of 8.5 was employed, combinations of 5-aminolevulinic acid hydrochloride with an iron compound, particularly with a specific amount of an iron compound, were found to exhibit the effect of improving alkali tolerance of a plant.

### Example 17

Calcium carbonate was added to field soil so as to adjust the Ca content to 5 mass%, and an appropriate amount of aqueous sodium carbonate solution was added thereto, followed by sufficiently mixing, to thereby provide alkaline soil (pH: 8.7). A chemical fertilizer (base fertilizer) was added to the alkaline soil in an amount of 10 kg/10 a (as reduced to N). Each of the pots (1/5000 a) was filled with the above soil, and 4 seeds of corn (species: Amai bantam 90, product of Tohoku Seed Co., Ltd.) were sown in the soil on November 15, followed by cultivation in a greenhouse. Twelve days after, two uniform seedlings per pot were selected by cutting. After cutting, an aqueous solution (0.05 mass%) of each agent having a composition shown in Table 6 was sprayed every 2 weeks to the stems and leaves of the plants in each pot (5 mL/pot), and the pot was controlled under ordinary conditions. On the day of December 26, the soil was washed out with water, whereby the plants were harvested, and the plant height of each plant was measured. Subsequently, the plants were dried at 80°C for 24 hours by a drier, and the dry weight of shoots of each plant was measured.

The averaged values and test conditions are shown in Table 6.

### Example 18

The test procedure of Example 17 was repeated, except that application of sulfur to soil treatment and application of other agent ingredients to foliage treatment were simultaneously performed. The results are shown in Table 6.

### Comparative Example 13

The test procedure of Example 17 was repeated, except that no agent treatment was performed. The results are shown in Table 6.

### Comparative Example 14

The test procedure of Example 17 was repeated, except that the agent was changed. The results are shown in Table 6.

### Comparative Example 15

The test procedure of Example 17 was repeated, except that the agent was changed. The results are shown in Table 6.

**[Table 6]**

| | pH of soil | Agent | | Plant height(cm) | Dry weight of shoots(g) |
|---|---|---|---|---|---|
| | | Ingredients | Concentration (mass%) | | |
| Ex. 17 | 8.7 | 5-Aminolevulinic acid hydrochloride | 0.3 | 23.0 | 0.38 |
| | | Fe-DTPA^{*3} | 0.6^{*2} | | |
| Ex. 18 | 8.7 | 5-Aminolevulinic acid hydrochloride | 0.3 | 25.1 | 0.43 |
| | | Fe-DTPA^{*3} | 0.6^{*2} | | |
| | | Sulfur powder | 0.25 g | | |
| Comp. Ex. 13 | 8.7 | (No treatment) | - | 23.2 | 0.28 |
| Comp. Ex. 14 | 8.7 | 5-Aminolevulinic acid hydrochloride | 0.3 | 23.2 | 0.30 |
| Comp. Ex. 15 | 8.7 | Sulfur powder | 0.25 g | 23.2 | 0.31 |

| | | | | | |
|---|---|---|---|---|---|
| *2: In iron equivalent *3: Ammonium diethylenetriaminepentaacetatoferrate | | | | | |

As is clear from Table 6, combinations of 5-aminolevulinic acid hydrochloride with an iron compound, and further with sulfur were found to exhibit a remarkable effect of improving alkali tolerance of a plant.

### Example 19

Culture soil (sowing mold, product of Takii Seed Co., Ltd.; 440 mg-N/L, 390 mg-P/L, and 410 mg-K/L) and plug soil for turf were mixed at 1 : 1, and calcium carbonate was added to the soil mixture to a Ca concentration of 5 mass%. An appropriate amount of aqueous sodium carbonate solution was added thereto, followed by sufficiently mixing, to thereby provide alkaline soil (pH: 8.8). Each of the No. 6-pots (surface area: 177 cm²) was filled with the above-prepared soil, and on the day of June 13, 4 seeds of sunflower (Pachino-gold, product of Takii Seed Co., Ltd.) were sown in the soil, followed by cultivation in a greenhouse. Fourteen days after, two uniform seedlings per pot were selected by cutting. After cutting, an aqueous solution (0.05 mass%) of each agent having a composition shown in Table 7 was sprayed every 2 weeks to the stems and leaves of the plants in each pot (5 mL/pot), and the pot was controlled under ordinary conditions. On the day of August 10, the plant height and the dry weight of shoots of each plant were measured. The averaged values and test conditions are shown in Table 7.

### Example 20

The test procedure of Example 19 was repeated, except that application of sulfur to soil treatment and application of other agent ingredients to foliage treatment were simultaneously performed. The results are shown in Table 7.

### Comparative Example 16

The test procedure of Example 19 was repeated, except that no agent treatment was performed. The results are shown in Table 7.

### Comparative Example 17

The test procedure of Example 19 was repeated, except that the agent was changed. The results are shown in Table 7.

### Comparative Example 18

The test procedure of Example 19 was repeated, except that the agent was changed. The results are shown in Table 7.

**[Table 7]**

| | pH of soil | Agent | | Plant height(cm) | Dry weight of shoots (g) |
|---|---|---|---|---|---|
| | | Ingredients | Concentration (mass%) | | |
| Ex. 19 | 8.8 | 5-Aminolevulinic acid hydrochloride | 0.3 | 42 | 8.1 |
| | | Fe-DTPA^{*3} | 0.6^{*2} | | |
| Ex.20 | 8.8 | 5-Aminolevulinic acid hydrochloride | 0.3 | 45 | 9.2 |
| | | Fe-DTPA^{*3} | 0.6^{*2} | | |
| | | Sulfur powder | 0.25 g | | |
| Comp. Ex. 16 | 8.8 | (No treatment) | - | 33 | 6.3 |
| Comp. Ex. 17 | 8.8 | 5-Aminolevulinic acid hydrochloride | 0.3 | 36 | 6.8 |
| Comp. Ex. 18 | 8.8 | Sulfur powder | 0.25 g | 34 | 6.5 |

| | | | | | |
|---|---|---|---|---|---|
| *2: In iron equivalent *3: Ammonium diethylenetriaminepentaacetatoferrate | | | | | |

As is clear from Table 7, combinations of 5-aminolevulinic acid hydrochloride with an iron compound, and further with sulfur were found to exhibit a remarkable effect of improving alkali tolerance of a plant.

### Example 21

Calcium carbonate was added to field soil so as to adjust the Ca content to 5 mass%, and an appropriate amount of aqueous sodium carbonate solution was added thereto, followed by sufficiently mixing, to thereby provide alkaline soil (pH: 8.8). A chemical fertilizer (base fertilizer) was added to the alkaline soil in an amount of 10 kg/10 a (as reduced to N). Each of the pots (1/5000 a) was filled with the above soil, and on the day of June 6, tomato seedlings (Kyoryoku Beijyu, product of Nohara Seed Co., Ltd.) were transplanted to the soil, followed by cultivation in a greenhouse. After transplanting, an aqueous solution (0.05 mass%) of each agent having a composition shown in Table 8 was sprayed every 2 weeks to the stems and leaves of the plants in each pot (5 mL/pot), and the pot was controlled under ordinary conditions. On the day of July 6, the soil was washed out with water, whereby the plants were harvested. Subsequently, the plants were dried at 80°C for 24 hours by a drier, and the dry weight of shoots of each plant was measured. The averaged values and test conditions are shown in Table 8.

### Example 22

The test procedure of Example 21 was repeated, except that application of sulfur to soil treatment and application of other agent ingredients to foliage treatment were simultaneously performed. The results are shown in Table 8.

### Comparative Example 19

The test procedure of Example 21 was repeated, except that no agent treatment was performed. The results are shown in Table 8.

### Comparative Example 20

The test procedure of Example 21 was repeated, except that the agent was changed. The results are shown in Table 8.

### Comparative Example 21

The test procedure of Example 21 was repeated, except that the agent was changed. The results are shown in Table 8.

**[Table 8]**

| | pH of soil | Agent | | Dry weight of shoots(g) |
|---|---|---|---|---|
| | | Ingredients | Concentration (mass%) | |
| Ex. 21 | 8.8 | 5-Aminolevulinic acid hydrochloride | 0.3 | 6.9 |
| | | Fe-DTPA^{*3} | 0.6^{*2} | |
| Ex. 22 | 8.8 | 5-Aminolevulinic acid hydrochloride | 0.3 | 7.5 |
| | | Fe-DTPA^{*3} | 0.6^{*2} | |
| | | Sulfur powder | 0.25 g | |
| Comp. Ex. 19 | 8.8 | (No treatment) | - | 3.1 |
| Comp. Ex. 20 | 8.8 | 5-Aminolevulinic acid hydrochloride | 0.3 | 4.5 |
| Comp. Ex. 21 | 8.8 | Sulfur powder | 0.25 g | 4.0 |

| | | | | |
|---|---|---|---|---|
| *2: In iron equivalent *3: Ammonium diethylenetriaminepentaacetatoferrate | | | | |

As is clear from Table 8, combinations of 5-aminolevulinic acid hydrochloride with an iron compound, and further with sulfur were found to exhibit a remarkable effect of improving alkali tolerance of a plant.

### Example 23

Calcium carbonate was added to field soil so as to adjust the Ca content to 5 mass%, and an appropriate amount of aqueous sodium carbonate solution was added thereto, followed by sufficiently mixing, to thereby provide alkaline soil (pH: 8.8). A chemical fertilizer (base fertilizer) was added to the alkaline soil in an amount of 10 kg/10 a (as reduced to N). Each of the pots (1/5000 a) was filled with the above soil, and 10 seeds of *Komatsuna* (Calvita, product of Nohara Seed Co., Ltd.) were sown in the soil, followed by cultivation in a greenhouse. Ten days after, five uniform seedlings per pot were selected by cutting. After cutting, an aqueous solution (0.05 mass%) of each agent having a composition shown in Table 9 was applied every 2 weeks to the surface of the soil in each pot (10 mL/pot), and the pot was controlled under ordinary conditions. Twenty-seven days after sowing, the soil was washed out with water, whereby the plants were harvested, and the plant height of each plant was measured. Subsequently, the plants were dried at 80°C for 24 hours by a drier, and the dry weight of shoots of each plant was measured. The averaged values and test conditions are shown in Table 9.

### Example 24

The test procedure of Example 23 was repeated, except that application of sulfur to soil treatment and application of other agent ingredients to foliage treatment were simultaneously performed. The results are shown in Table 9.

### Comparative Example 22

The test procedure of Example 23 was repeated, except that no agent treatment was performed. The results are shown in Table 9.

### Comparative Example 23

The test procedure of Example 23 was repeated, except that the agent was changed. The results are shown in Table 9.

### Comparative Example 24

The test procedure of Example 23 was repeated, except that the agent was changed. The results are shown in Table 9.

### Comparative Example 25

The test procedure of Example 23 was repeated, except that the agent was changed. The results are shown in Table 9.

**[Table 9]**

| | pH of soil | Agent | | Plant height(cm) | Dry weight of shoots (g) |
|---|---|---|---|---|---|
| | | Ingredients | Concentration (mass%) | | |
| Ex. 23 | 8.8 | 5-Aminolevulinic acid hydrochloride | 0.3 | 13.0 | 2.6 |
| | | Fe-DTPA^{*3} | 0.6^{*2} | | |
| Ex. 24 | 8.8 | 5-Aminolevulinic acid hydrochloride | 0.3 | 13.2 | 3.0 |
| | | Fe-DTPA^{*3} | 0.6^{*2} | | |
| | | Sulfur powder | 0.25 g | | |
| Comp. Ex. 22 | 8.8 | (No treatment) | - | 10.2 | 2.1 |
| Comp. Ex. 23 | 8.8 | 5-Aminolevulinic acid hydrochloride | 0.3 | 10.3 | 2.1 |
| Comp. Ex. 24 | 8.8 | Fe-DTPA^{*3} | 0.6^{*2} | 10.1 | 1.9 |
| Comp. Ex. 25 | 8.8 | Sulfur powder | 0.25 g | 10.3 | 2.2 |

| | | | | | |
|---|---|---|---|---|---|
| *2: In iron equivalent *3: Ammonium diethylenetriaminepentaacetatoferrate | | | | | |

As is clear from Table 9, even in the case of soil treatment, combinations of 5-aminolevulinic acid hydrochloride with an iron compound, and further with sulfur were found to exhibit a remarkable effect of improving alkali tolerance of a plant.

## Claims

1. An agent for improving alkali tolerance of a plant, comprising:
(i) 5-aminolevulinic acid or a derivative thereof represented by the following formula (1):
R²R¹NCH₂COCH₂CH₂COR³ (1)
wherein each of R¹ and R² represents a hydrogen atom, an alkyl group, an acyl group, an alkoxycarbonyl group, an aryl group, or an aralkyl group, and R³ represents a hydroxy group, an alkoxy group, an acyloxy group, an alkoxycarbonyloxy group, an aryloxy group, an aralkyloxy group, or an amino group,
or a salt of either of these;
(ii) an iron compound; and
(iii) elemental sulfur.

2. The agent for improving alkali tolerance according to claim 1, which contains an iron compound in an amount of 20 to 1,000 mass% in iron equivalent, with respect to 100 mass% of 5-aminolevulinic acid, a derivative thereof, or a salt of either of these.

3. The agent for improving alkali tolerance of a plant according to claim 1 or 2, wherein the iron compound is one or more species selected from among metallic iron, iron oxide, heme iron, iron citrate, iron succinate, iron sodium citrate, iron ammonium citrate, iron acetate, iron oxalate, iron malate, iron sodium succinate citrate, ferrous pyrophosphate, ferric pyrophosphate, dextran iron, iron lactate, iron gluconate, sodium ethylenediaminetetraacetatoferrate, potassium ethylenediaminetetraacetatoferrate, ammonium ethylenediaminetetraacetatoferrate, sodium diethylenetriaminepentaacetatoferrate, potassium diethylenetriaminepentaacetatoferrate, ammonium diethylenetriaminepentaacetatoferrate, iron fulvate, iron humate, iron ligininsulfate, iron chloride, iron nitrate, iron sulfate, iron ammonium sulfate, iron glycerophosphate, iron tartrate, and iron glycolate.

4. A method for improving alkali tolerance of a plant, comprising treating a plant, or soil or a medium in which the plant grows with the agent for improving alkali tolerance of a plant according to any one of claims 1 to 3.

## Patentansprüche

1. Mittel zur Verbesserung der Alkalitoleranz einer Pflanze, umfassend:
(i) 5-Aminolävulinsäure oder ein Derivat davon der folgenden Formel (1):
R²R¹NCH₂COCH₂CH₂COR³ (1)
worin jedes von R¹ und R² für ein Wasserstoffatom, eine Alkylgruppe, eine Acylgruppe, eine Alkoxycarbonylgruppe, eine Arylgruppe oder eine Aralkylgruppe steht und R³ für eine Hydroxygruppe, eine Alkoxygruppe, eine Acyloxygruppe, eine Alkoxycarbonyloxygruppe, eine Aryloxygruppe, eine Aralkyloxygruppe oder eine Aminogruppe steht, oder ein Salz von diesen;
(ii) eine Eisenverbindung; und
(iii) elementaren Schwefel.

2. Das Mittel zur Verbesserung der Alkalitoleranz gemäß Anspruch 1, das eine Eisenverbindung in einer Menge von 20 bis 1.000 Gewichtsprozent an Eisenäquivalenten bezogen auf 100 Gewichtsteile von 5-Aminolävulinsäure, einem Derivat davon oder einem Salz von einem von diesen enthält.

3. Das Mittel zur Verbesserung der Alkalitoleranz einer Pflanze gemäß Anspruch 1 oder 2, worin die Eisenverbindung eine oder mehrere ausgewählt aus metallischem Eisen, Eisenoxid, Hämeisen, Eisencitrat, Eisensuccinat, Eisen-Natrium-Citrat, Eisen-Ammonium-Citrat, Eisenacetat, Eisenoxalat, Eisenmalat, Eisen-Natrium-Succinat-Citrat, Eisen(II)pyrophosphat, Eisen(III)pyrophosphat, Dextran-Eisen, Eisenlactat, Eisengluconat, Natrium-Ethylendiamintetraessigsäureferrat, Kalium-Ethylendiamintetraessigsäureferrat, Ammonium-Ethylendiamintetraessigsäureferrat, Natrium-Ethylentriaminpentaessigsäureferrat, Kalium-Diethylentriaminpentaessigsäureferrat, Ammonium-Diethylentriaminpentaessigsäureferrat, Eisenfulvat, Eisenhumat, Eisen-Ligininsulfat, Eisenchlorid, Eisennitrat, Eisensulfat, Eisenammoniumsulfat, Eisenglycophosphat, Eisentartrat und Eisenglycolat ist.

4. Verfahren zur Verbesserung der Alkalitoleranz einer Pflanze, umfassend Behandeln einer Pflanze oder von Boden oder einem Mediums, in dem die Pflanze wächst, mit dem Mittel zur Verbesserung der Alkalitoleranz einer Pflanze gemäß einem der Ansprüche 1 bis 3.

## Revendications

1. Agent pour améliorer la résistance aux alcalis d'une plante, comprenant :
(i) de l'acide 5-aminolévulinique ou un dérivé de celui-ci, représenté par la formule (1) suivante :
R²R¹NCH₂COCH₂CH₂COR³ (1)
dans laquelle chacun de R¹ et R² représente un atome d'hydrogène, un groupe alkyle, un groupe acyle, un groupe alcoxycarbonyle, un groupe aryle, ou un groupe aralkyle, et R³ représente un groupe hydroxy, un groupe alcoxy, un groupe acyloxy, un groupe alcoxycarbonyloxy, un groupe aryloxy, un groupe aralkyloxy, ou un groupe amino,
ou un sel de l'un ou l'autre de ceux-ci ;
(ii) un composé du fer ; et
(iii)du soufre élémentaire.

2. Agent pour améliorer la résistance aux alcalis selon la revendication 1, qui contient un composé du fer en une quantité de 20 à 1000 % en masse d'équivalent fer, pour 100 % en masse d'acide 5-aminolévulinique, d'un dérivé de celui-ci, ou d'un sel de l'un ou l'autre de ceux-ci.

3. Agent pour améliorer la résistance aux alcalis d'une plante selon la revendication 1 ou 2, dans lequel le composé du fer est une ou plusieurs espèces choisies parmi le fer métallique, l'oxyde de fer, le fer héminique, le citrate de fer, le succinate de fer, le citrate de fer et de sodium, le citrate de fer et d'ammonium, l'acétate de fer, l'oxalate de fer, le malade de fer, le succinatecitrate de fer et de sodium, le pyrophosphate ferreux, le pyrophosphate ferrique, le dextrane-fer, le lactate de fer, le gluconate de fer, l'éthylènediaminetétraacétatoferrate de sodium, l'éthylènediaminetétraacétato-ferrate de potassium, l'éthylènediaminetétraacétato-ferrate d'ammonium, le diéthylènetriaminepentaacétato-ferrate de sodium, le diéthylènetriaminepentaacétato-ferrate de potassium, le diéthylènetriaminepentaacétato-ferrate d'ammonium, le fulvate de fer, l'humate de fer, le ligninesulfate de fer, le chlorure de fer, le nitrate de fer, le sulfate de fer, le sulfate de fer et d'ammonium, le glycérophosphate de fer, le tartrate de fer, et le glycolate de fer.

4. Procédé pour améliorer la résistance aux alcalis d'une plante, comprenant le traitement d'une plante ou d'un sol ou d'un milieu dans lequel la plante pousse avec l'agent pour améliorer la résistance aux alcalis d'une plante selon l'une quelconque des revendications 1 à 3.
